Europäisches Patentamt

European Patent Office

Office européen des brevets

(11) Publication number: **0 403 905**
**A1**

## EUROPEAN PATENT APPLICATION

(21) Application number: 90110962.9

(51) Int. Cl.5: **G01N 35/06, G01N 35/04**

(22) Date of filing: **09.06.90**

(30) Priority: **19.06.89 US 368475**

(43) Date of publication of application:
**27.12.90 Bulletin 90/52**

(84) Designated Contracting States:
**CH DE FR GB IT LI**

(71) Applicant: **F. HOFFMANN-LA ROCHE AG
Postfach 3255**
CH-4002 Basel(CH)

(72) Inventor: **Fansler, David Vaughan
700 Ward Street
Graham, North Carolina 27253(US)**

(74) Representative: **Ventocilla, Abraham et al
Grenzacherstrasse 124 Postfach 3255
CH-4002 Basel(CH)**

(54) **Apparatus for liquid sample aliquot distribution.**

(57) An apparatus for automatically distributing on a continuous basis aliquot portions of a liquid sample (10) to a plurality of test tubes (11) and preferably dividing the tubes containing said aliquot portions of the sample into testing categories (a-p). The apparatus includes tube conveying means (1a,1b), labeling means, data reading means (3), external pressure sample distributing means (7) and tube sorting means (300).

F I G. I

## Apparatus for liquid sample aliquot distribution

The present invention relates to an apparatus for automatically distributing aliquot portions of a liquid sample to a plurality of test tubes on a continuous basis.

In order to analyze a liquid sample such as a blood serum sample for various analytical testing, the sample must be distributed in aliquot quantities to a plurality of test tubes. Usually, this is accomplished by hand with consequent possible contamination of the sample. It is obviously to be desired to be able to accomplish this distribution continuously and by automatic mechanical distribution means. Such means should accomplish the following: a) transport a plurality of empty tubes to a position where the original sample may be distributed among them; b) distribute the original sample to as many test tubes as is required for the number and type of tests to be performed; c) provide means for identifying the test tubes in accordance with the tests to be performed and subsequent sorting into various test stations.

Accordingly, a primary aim of the present invention is to provide a mechanical apparatus which can automatically and continuously, by mechanical means, distribute an original liquid sample to a plurality of test tubes. The invention should preferably also provide means for ultimately dividing those test tubes containing aliquot portions of the original sample into categories according to the ultimate tests to be performed.

According to the invention the primary aim thereof is attained with an apparatus comprising:

(a) a first test tube conveying means capable of carrying a plurality of original sample test tubes containing each an original liquid sample to be tested, said sample test tubes being labeled and identified according to identity and analytical tests to be performed on the original samples;

(b) a second test tube conveying means capable of carrying a plurality of empty receiving test tubes for receiving aliquot portions of each original liquid sample;

c) data reading means for reading from each of the original sample test tubes containing an original sample, data showing the identity of the sample and analytical tests to be performed on said aliquot portions; and

(d) means for continuously distributing aliquot portions of an original liquid sample from each of the original sample test tubes to receiving test tubes in amounts sufficient for predetermined analytical testing in accordance with the data read by the data-reading means.

In a preferred embodiment, sorting means are provided for dividing the receiving test tubes containing the aliquot portions into predetermined categories according to the nature of the an analytical testing to be performed as determined by the data reading means.

The invention can be more fully understood from the following detailed description which, when taken in conjunction with the accompanying drawings, will fully describe the various embodiments thereof.

Figure 1 is a plan view schematically showing the overall apparatus of the invention.

Figure 2A-2C show embodiments of a piston fit filter/dispenser vial insertion station for insertion thereof into tubes containing samples to be tested.

Figure 3 shows an embodiment of the pump station for dispensing aliquot portions of the samples to be tested into a second set of tubes to be sorted according to the tests desired.

Figure 4A-4D show various embodiments and details of the sorting station whereby the test tubes containing the aliquot portions are sorted and separated according to the analytical tests to be performed.

Figure 5 show the detail of the piston fit filter/dispenser vial in cross-section view.

Figure 6 is a block diagram of the control section of the apparatus.

Figure 7 is a flow chart illustrating the operation of the liquid-distributing apparatus of the invention.

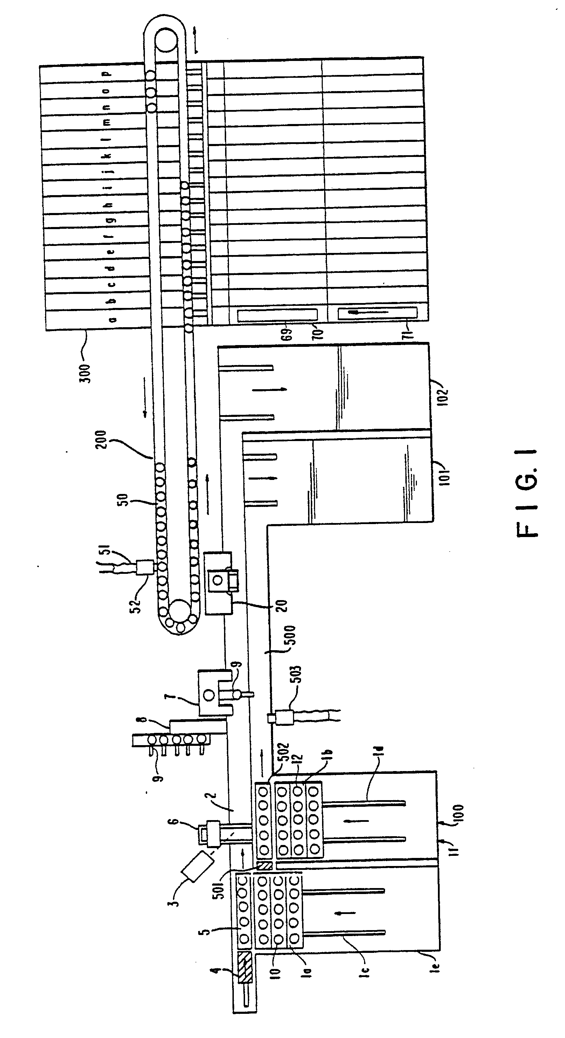

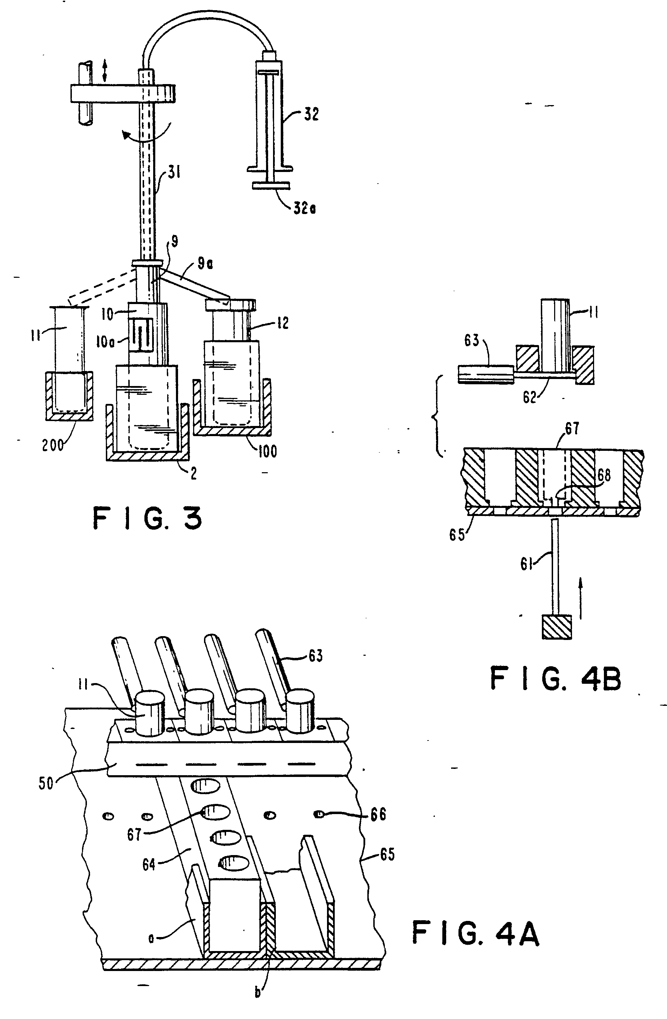

In a preferred embodiment of the present invention an apparatus for continuously distributing a sample of blood serum among the various test tubes will now be described with reference to the accompanying drawings. As shown in Figure 1, test tube block holder 1a is designed to hold a series of test tubes containing serum samples transported along pathway 2, one tube after another tube, as each individual block is pushed upwardly into the pathway 2 as shown by the arrows. The holders 1b are dedicated to empty tubes for one embodiment of the invention to be later described; i.e., the "high-volume standardized" station. Figure 3 shows one of these original test tubes 10 which contains a predetermined amount of the serum-sample. A designating label 10a is placed upon test tube 10 and printed on this label is a bar code 10a. This bar code contains sufficient information and coded thereon to identify the original sample and the various items that need to be analyzed in the sample.

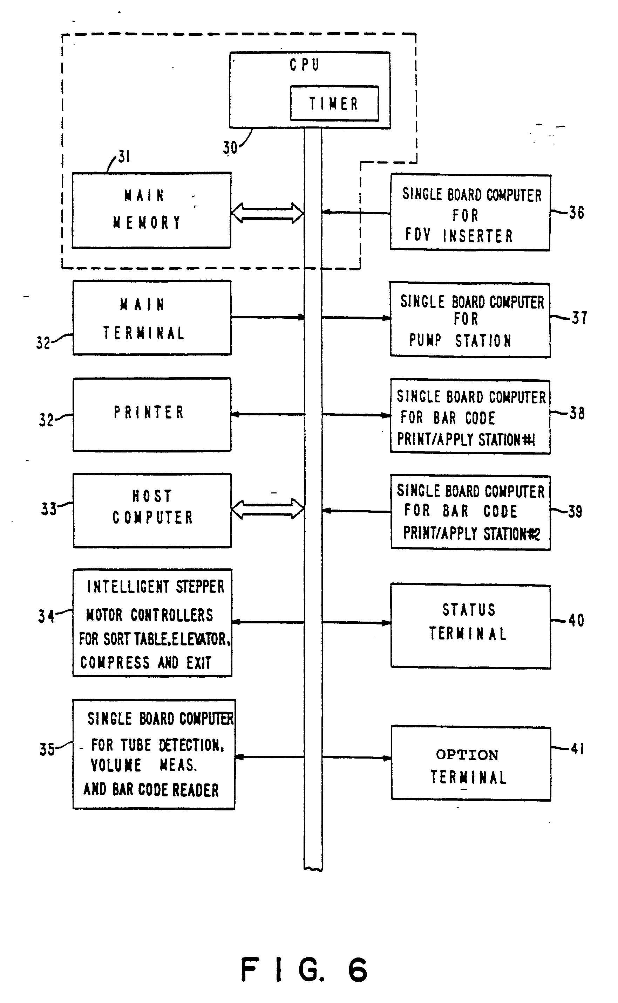

The bar code 10a is then read by a bar code reader 3 which is located proximate to and along side pathway 2 as shown in Figure 1. The data read by bar code reader 3 is then supplied to a control device illustrated in Figure 6 which control device comprises CPU 30 and main memory 31. This data is stored in the main memory 31 which is under the control of the CPU 30. The main memory 31 conventionally includes an ROM which stores a program for the overall control of the apparatus, and a RAM. The RAM as is conventionally known is capable of storing and providing the various data items needed for the appropriate operation of the apparatus and the various items of information that needed to be place on the samples. The data output by the bar code reader 3 (Fig. 1) is stored into the RAM.

Referring back to Figure 1, serum blocks 1a are provided with a plurality of holes for containing test tubes 10. A bar code label is placed on the original serum tube before the tube is placed into serum block 1a, typically at a physician's office or hospital laboratory when the specimen is collected. Compressor rods 1c controlled by a stepper motor (not shown) push forward serum blocks 1a into serum channel or pathway 2 so that one by one the blocks are inserted into the pathway. At this point pusher block 4 controlled by stepper motor (not shown) pushes the inserted block 5 a predetermined distance to volume level detection station 6 where the presence of a tube is detected and the volume level in the tube is determined. At the same time, the bar code on the tube is read by bar code reader.

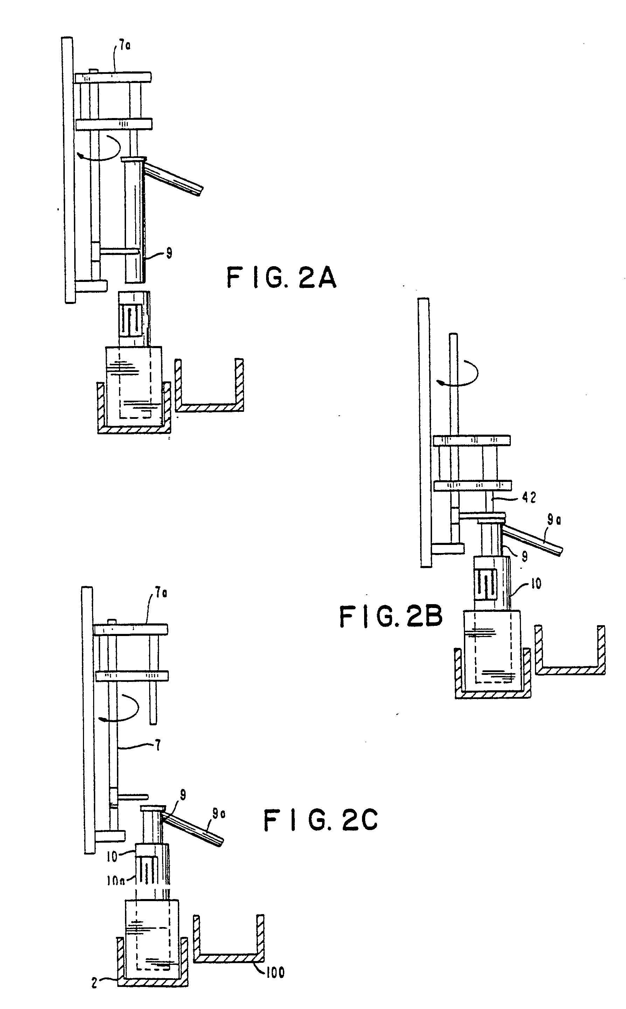

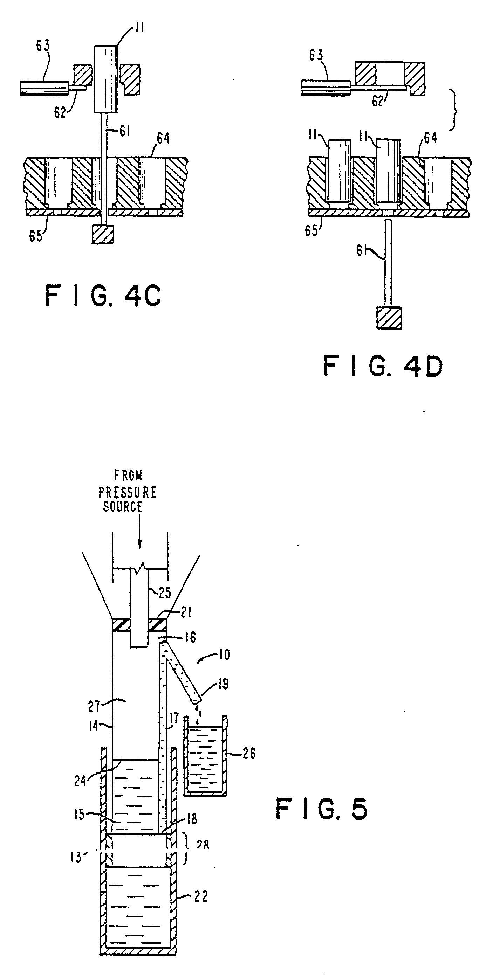

At this point pusher block 4 continues to push block 5 along the pathway 2 so that each tube in block 5 pauses at level detection station 6. At this point, block 5, with the inserted tubes, reaches the insertion station for the piston fit filter/dispenser vial. This filter/dispenser vial hereinafter referred to as "FDV" is the subject of copending European application No. 89106853.8 with publication No. 0339429 A2 which is hereby incorporated by reference. For purposes of illustration this FDV is shown in detail in Fig. 5. At the insertion station 7, a rod assembly 42 capable of ninety degrees of rotation turns to the FDV pickup area 8, where rod assembly 42 moves down, thus obtaining an FDV (by pressure fit onto rod assembly 42). Rod assembly 42 then rotates back ninety degrees where the FDV will be positioned over tube 10 in rack 2b as shown in Fig. 2A. As shown in Fig. 2B, rod assembly 42 moves down thereby inserting a FDV into tube 10. Also shown in Fig. 2B is fork 41 which is extended before rod assembly 42 is withdrawn from the FDV, thereby leaving the FDV in tube 10. Fig. 2C illustrates the position of the rod assembly 42 after a FDV has been inserted into tube 10 and rod assembly 42 has been withdrawn leaving the FDV in tube 10. CPU 20 issues appropriate commands to microcomputer 36 (Fig. 6) which has the ability of accomplishing the aforesaid movements.

The test tube 10 with FDV 9 then moves to pump station 20 as shown in Figure 1. Figure 3 shows the detail of pump station 20. At pump station 7 (Figure 3), when pressure rod 31 is inserted into the FDV 9 within the tube 10, the spout 9a of FDV 9 is optically aligned by means of a laser (not shown) and its rotational position is controlled by microcomputer 37 (Fig. 6) by a stepper motor (not shown) in order that transfer tube spout 9a is positioned precisely and directly above the open end of either receiving tube 11 or receiving tube 12 awaiting the delivery of the aliquot portion of the original sample contained in tube 10. The operation of FDV and the means by which measured aliquot portions of the original samples are transferred into the receiving tubes will be described in greater detail below.

Turning back to Figure 1, the block 1a holding tubes 10 is so designed as to move approximately one inch at a time up-to pump station 7 so that at any particular instant of time, volume detection, FDV insertion and serum aliquot delivery is being continuously performed along pathway 2.

In a preferred embodiment, also shown in Figure 1, a tube chain 50 is also provided wherein tubes 11 are mechanically loaded onto said tube chain from a magazine (not shown) containing the empty test tubes. These test tubes are being readied to receive the delivery of the aliquot portions of the sample for subsequent sorting and transport to various analytical testing stations outside of the immediate vicinity of the apparatus. The tube chain 50 movement is conducted past a print/apply station 51 as shown whereby a label is printed and then applied to each test tube 11. Tube chain 50 movement will then move test tube 11 into position at pump station 20 to receive a portion of serum. Test tubes 11 are used for tests that are a "low volume", that is to say, that the number of tests of a particular type to be performed on these tubes is relatively few and are generally "specialized" in nature. The side of pump station 20 from which these tubes will receive an aliquot will be hereinafter referred to as the "specialized" station. Aliquot portions of the samples may be distributed to either side of the pump station; the side opposite the "specialized" station will be referred to as the "standardized" station. The standardized station is used for tests which are high volume; that is to say, a large percentage of tests performed on all blood serum will be of this type (e.g., cholesterol, glucose, BUN, etc) and are commonly performed on the same analytical instrument.

In order for tubes to arrive at the standardized station the following events occur: tubes 12 are placed in racks 1b (Figure 1) which in turn are placed in bed 100. Compressor rods 1d controlled by a stepper motor (not shown) push forward blocks 1b into high volume channel or pathway. At this point pusher block 501 controlled by a stepper motor (not shown) pushes the inserted block 502 a predetermined distance to a second print/apply station 503. As needed a label will be printed and applied to tube 12 which will then be pushed by pusher block 502 into the standardized station 100 of pump station 20.

In this manner the apparatus provides the versatility of enabling a high volume of tubes traveling to the standardized testing station to be tested for common purposes, together with the ability for performing different individualized testing on single samples in accordance with predetermined medical directions at the specialized station. This distinction and sorting of the original test tube samples into either the "standardized" or the "specialized" station is dictated by a microcomputer with information sent by CPU 30.

Turning now to Figure 3, rotation of FDV transfer tube spout 9a positions the end of this spout as previously described directly over the open end of receiving tubes 11 in pathway 2 or over the open end of receiving tubes 12 in pathway 500 so that an aliquot volume of the serum sample can be dispensed into either a tube in the specialized zone's tube chain 50 or the standardized zone's pathway 500. In this fashion the sample, because of the rotation ability of the FDV transfer tube spout 9a, can be dispensed in either direction depending upon the nature of the tests to be performed and whether they are to be "standardized" or "specialized" as previously described.

As shown in Figure 3, the FDV transfer tube spout 9a at this point hovers in relatively fixed position, as controlled by a stepper motor (not shown) and a laser (not shown), over the open empty end of the receiving tube 12. Pressure rod 31 is a hollow stainless steel rod with vertical and rotational motion. When pressure rod 31 is inserted into FDV 9 it forms an air tight seal. Pressure rod 31 is attached to a motor driven syringe 32 (schematically shown). Command by CPU 30 to microcomputer 37 causes positive air displacement by the syringe to occur. In this manner, a predetermined measured quantity of the aliquot portion of the sample (required for the particular test instructions given and test to be performed) is dispensed by upflow through the transfer tube spout 9a and into the empty sample receiving tube 12. If required by the particular test requested, once pressure rod 31 is inserted into FDV 9, FDV transfer tube spout 9a can be rotated 180 degrees so that it will hover over the open end of receiving tube 11. The method of dispensing is the same as described above. As with the insert station 7, a fork holds the FDV 9 in the original serum tube as pressure rod 31 is removed.

As further shown in Figure 1, the tubes from the "standardized" station 100 continue to move down pathway 500 to ramp 101 to be off-loaded from the apparatus and continue for subsequent sorting and testing as required to be conducted for the standardized analysis to be performed on the samples. In the "specialized" version shown in Figure 1, at 200 the tube chain 50 continues to move the series of tubes containing the samples to sorting a table 300.

The operation of FDV 9 in transferring aliquot portions of the liquid sample to the receiving tubes 11 or 12 will now be described, in detail. As previously mentioned, the FDV device is described in copending application S.N. 185,655, portions of which disclosure (to the extent needed to describe the present inventions) will now be repeated so the extent desirable.

Referring to Figure 5, the vial comprises a hollow shaft 10 having a side wall 14 defining an interior 27. The hollow shaft 10 has a lower end 15 which is closed by filter assembly 28. The hollow shaft 10 also has an upper end 16 which is closed by closure 20.

A transfer tube 17 is partially located within the hollow shaft 10. The transfer tube 17 has a first end 18 which opens into the interior 27 of the hollow shaft 10 preferably adjacent to the filter assembly 28 in the lower end 15. The transfer tube 17 has a second end 19 which is located outside the hollow shaft 10.

As shown, the transfer tube 17 extends out through the side wall 14 of the hollow shaft 10.

The transfer tube 17 may be constructed integrally with the side wall 14 as shown or may be constructed as a separate element (not illustrated).

The vial and transfer tube are preferably manufactured from a transparent or semi-transparent material. The vial may, for example, be constructed of glass or plastic which is preferably non-porous and inert to the intended filtrate. Suitable plastic materials for a serum filter application would include, polyacrylate, polyvinyl and polystyrene.

The filter element 28 includes a filter 13 and may be constructed ot any suitable conventional material. However, in the case where the vial is to be used for filtering blood serum, the filter material should preferably be inert to blood. The filter material should have pores which permit the passage of soluble blood components but prevent passage of insoluble blood components through the filter. More particularly, the pores should be sized to deny passage of solid and semi-solid particulate material having a spherical diameter of greater than 50 microns.

Suitable filter materials would include porous plastic materials, more particularly porous polyethylene, porous polyurethane, porous tetrafluoroethylene and the like. Porous ceramic materials, scintered glass, glass wool, and the like may also be employed.

The closure 20 includes a pressure source fitting 21, which is sized to receive the external pressure source 25 as shown in Fig. 5.

The closure 20 may be constructed integrally with the side wall 14 or may be constructed as a separate element which is held in the upper end 16 of the hollow shaft 10 by friction fit, for example.

According to the invention, a blood or other liquid sample is contained in test tubes 10. The FDV 9 is pushed down into the test tube 10. The pressure source fitting 31 (Fig. 5) permits air within the FDV 9 to escape as serum 24 fills up inside as FDV 9 is inserted into tube 10.

As shown in Fig. 5, the FDV, after being pushed into test tube 10, filters out particulate matter so that serum 24 collected in interior 27 of the hollow shaft 10a is without particulate matter. As shown in Fig. 1, tube 10 with FDV 9 moves down pathway 2 from the FDV insertion station 7. At this stage, the external pressure source 25 (Fig. 5), for example, a conventional automatic pipette, may be inserted into pressure source fitting 21. A predetermined volume of air may be forced into the interior 27 of the vial. CPU 30 gives a command to an external pressure source, e.g. an air cylinder (not shown in Fig. 5), which in response to the command, causes a predetermined volume of air to be forced into the interior 27 of the FDV vial. As shown in Fig. 3, this is accomplished via motor driven syringe 32. The volume of air used has been determined by a bar code reader 3. In this preferred embodiment, CPU 30 gives commands to other microcomputers that cause blocks 1a with tubes 20 of original serum to move into pathway 2. Pusher block 4 causes block 5 with tube 10 of original serum to move along pathway 2 to the bar code reader 3 and level detection station 6. If a tube 10 is detected at this station, its bar code is read and its volume determined. This information is returned to CPU 30. Pusher block 4 now causes block 5 containing tubes 10 of original serum to move down pathway 2 to the FDV insertion station 7. A magazine containing FDVs 9 feeds FDV pickup station 8, where at FDV insertion station 7, with up/down and rotational movement, FDV rotator assembly 7a (Fig. 2A) rotates to FDV pickup station 8 (Fig. 1) and attaches FDV 9 to rod 42. FDV rotator assembly 7a then rotates back such that the attached FDV 9 is positioned over pathway 2, specifically over tube 10 in block 5.

As with previous movements of the FDV insertion station, a microcomputer 36 under CPU 30s command instructs stepper motors (not shown) to lower the FDV 9 into tube 10 (Fig. 2B). Referring to Fig 2B, once FDV 9 is inserted into tube 10, fork 41 holds FDV 9 in tube 10 as rod 42 is raised. Thereafter, CPU 30 gives another command to pusher block 5, and in response to this command signal the test tubes containing the original samples are moved along pathway 2 to the pump station 20 (Fig. 1).

Referring to Figure 3, at this position CPU 30 commands microcomputer 37 to lower pressure rod 31 of pump station 20 into the FDV 9 positioned below. Once lowered, pressure rod 31 makes an air tight seal with FDV 9, and then rotates by means of a stepper motor (not shown) so that spout 9a of FDV 9 is positioned via a laser (not shown) proximate to and directly above the open end of receiving tube 11. At this point, microcomputer 37 instructs motor driven syringe 32 (Fig. 3) to displace the predetermined aliquot of filtered serum 24 which is forced up through the transfer tube spout 9a into test tubes 11 or 12 in predetermined aliquot quantities as determined by the data read by the bar code reader 3 on which is contained the codes or instructions that will enable the appropriate testing.

After receipt of the aliquot samples, the receiving test tubes 11 are then transported by conveying means to the sorting station 300 shown in Figure 1. CPU 30 determines, from data read by bar code reader 3, to which sorting position each test tube is to be transported. As will be evident CPU 20 "knows" the position of each tube on the tube chain 50 by tracking the tubes position as CPU 30 issues commands for the tube chain 50 to move. As each tube 11 in tube chain 50 reaches the proper position (e.g. a, b, c, d etc. through 50) to which the specific individual test tube 11 is to be transported, CPU 30 commands an intelligent stepper motor controller 34 to transport test tube 11 into a new block 505 in the appropriate sorting row. CPU 30 then instructs a motor controller 34 to raise elevator rods 61. Rods 61, of which there are 50 in this embodiment, (this number can be increased or decreased according to the need), pass through support plate 65 via hole 66 into each sorting bin. Located in each sorting bin is a block 64 with hole 67. This hole is large enough for test tube 11 to fit into. Hole 67 stops within a small distance of the bottom of block 64, but passage through the block 64 continues with a small hole 68 through which rods 61 can pass (Fig.4B). Rods 61 pass through small hole 68, through hole 67 and stop just under trap door 62. For any test tubes 11 that are then over the correct bin as determined by the information obtained by bar code reader 3, CPU 30 directs solenoid 63 to open trap door 62 allowing test tubes 22 to drop onto rods 61, thereby allowing the test tubes to rest and ride on elevator rods 61 (Fig. 4C). In response to command, said elevator rod 61 then descends (Fig. 4D) thereby guiding test tube 11 into sorting block 64.

In Fig 4A, an empty sorting block 64 is shown prior to the filling by test tube 11. Each sorting block 64 is designated and intended for delivery for off-loading to a specific testing station, in accordance with the predetermined analytical test to be performed on the designated test tubes in that block. Movement of sorting blocks 64 is controlled by a pusher block 71 and stepper motor (not shown) with stored sorting blocks 69 (Fig. 1) in the storage bins 70 (Fig. 1).

Figure 6 shows the basic interconnection of the controlling electronics as exist in the preferred embodiment and will now be explained. CPU 30 with main memory is a microcomputer with a multiuser/multitasking operating system capable of carrying out several tasks at one time. Operator communication with CPU 30 is through main terminal 32. From this point, the operator instructs CPU 30 to start operation of the apparatus. Much of the various motion controls are performed by small microcomputers (34-39) that are dedicated to a certain task. Communication with these various microcomputers with CPU 30 is via the RS-232 standard. Each one of these microcomputers performs a task as indicated by Figure 6. Printer 32 is used to create hard copies of performance reports, problem reports, or any other information needed in a hard form. Status terminal 40 is used for problem solving by displaying diagnostic status reports of the apparatus as it operates, thereby allowing for rapid problem solving. Optional terminal 41 can be used in a variety of functions such as report lookup when the main terminal is being used for control of the apparatus. Host computer 33 is typically a "main frame" style computer in which information is stored which is to be used by the apparatus; i.e., when a particular test is requested on a serum sample, the quantity of serum needed to be aliquoted, and the bin into which the aliquoted sample is to placed.

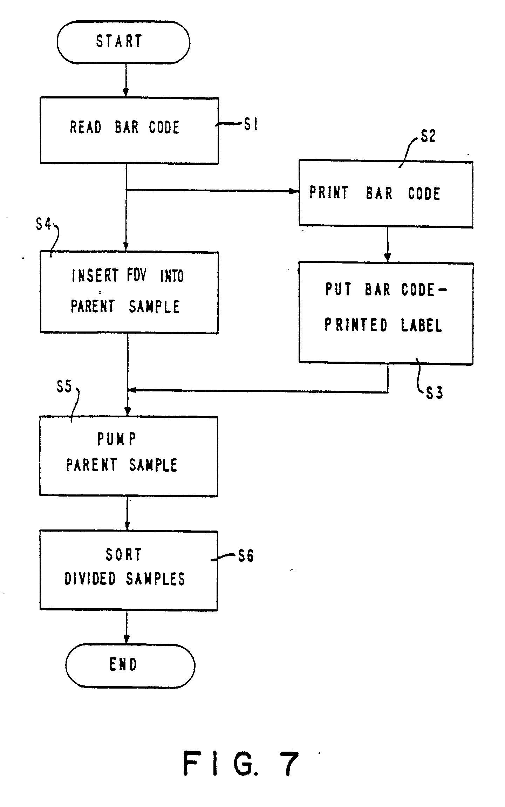

Figure 7 demonstrates the basic operation of the apparatus in a flow chart diagram. At START: all power systems are activated and CPU 30 is brought on line; test tubes 10 are loaded into blocks 1a and placed on bed 1e; empty test tubes 12 are loaded into block 1b and placed on bed 1f; empty FDV 9's are loaded into FDV storage 6; empty test tubes 11 are loaded into the magazine (not shown); print/apply systems 51 and 503 are loaded with label stock; and empty blocks 64 are loaded into block storage 70. READ BAR CODE: As the blocks 5 move down pathway 2 they reach the bar code reader 3 where not only is the bar code read, but a volume determination is made. Communication between CPU 30 and host computer 33 is performed with information regarding how many aliquots. which bin to place the aliquots, and label information for the serum samples. As noted in Figure 7, new label(s) are printed and applied to test tubes (11 and 12) during the same time frame as FDV 9 is placed into test tube 10 with the original sample. At PUMP PARENT SAMPLE: Once the labeled test tubes, 11 & 12 (as needed), are in place at pump station 20, predetermined aliquot samples are dispensed via FDV 9 and motor driven syringe 32. At SORT DIVIDED SAMPLES: Tubes 12 in blocks 502 continue down pathway 500 and exit the apparatus via bed 101; tubes 11 in tube chain 50 are conveyed to sort area 300 where once an aliquoted sample is positioned over the predetermined bins, tubes 11 are lowered into block 64 whereby the tubes then exit the apparatus.

While certain specific embodiments of the apparatus of the present invention have been described above, it will be understood that various modifications within the spirit and scope of the invention may occur to those skilled in the art. Therefore, it is intended that no limitations be placed on the invention except as may be defined by the scope of the following claims.

## Claims

1. An apparatus for automatically distributing aliquot portions of a liquid sample to a pluraliry of test tubes on a continuous basis comprising:

(a) a first test tube conveying means capable of carrying a plurality of original sample test tubes containing each an original liquid sample to be tested, said sample test tubes being labeled and identified according to identity and analytical tests to be performed on the original samples;

(b) a second test tube conveying means capable of carrying a plurality of empty receiving test tubes for receiving aliquot portions of each original liquid sample;

(c) data reading means for reading from each of the original sample test tubes containing an original sample, data showing the identity of the sample and analytical tests to be performed on said aliquot portions; and

(d) means for continuously distributing aliquot portions of an original liquid sample from each of the original sample test tubes to receiving test tubes in amounts sufficient for predetermined analytical testing in accordance with the data read by the data-reading means.

2. The apparatus of claim 1, which additionally comprises (e) means for sorting said receiving test tubes containing said aliquot portions into predetermined categories according to the nature of the analytical testing to be performed as determined by said data-reading means.

3. The apparatus of claim 1, wherein said means described in (d) comprises external pressure means and means for inserting a dispensing device responsive to said pressure means into each of said original sample test tubes, said device being responsive to a predetermined volume of air for dispensing said aliquot portions to said receiving test tubes by means of positive air displacement.

4. The apparatus of claim 3, wherein said dispensing device comprises

A. a hollow shaft including a side wall defining an interior, said hollow shaft having an upper and end and a lower end;

B. a piston fit filter means located in and closing the bottom end of the hollow shaft;

C. a transfer tube means having a first end located within the interior of the hollow shaft and a second and located outside the hollow shaft; and

D. closure means located in the upper end of the hollow shaft for closing the hollow shaft, said closure means including a fitting for receiving the external air pressure source.

5. The apparatus of claim 4, which additionally comprises (f) means for positioning each of said original sample test tube, on a continuous basis, in close proximity to one or more of said empty receiving test tubes, whereby said transfer tube means of said dispensing device can be positioned over the open ends of said empty receiving test tubes.

6. The apparatus of claim 5, which additionally comprises (e) means for sorting said receiving test tubes containing said aliquot portions into predetermined categories according to the nature of the analytical testing to be performed as determined by said data-reading means.

7. The apparatus of claim 6, wherein said sorting means comprises means for removing said receiving test tubes containing said aliquot portions from said second test tube conveying means, and means for placing said test tubes into predetermined positions according to the analytical tests to be performed thereon.

8. The apparatus of claim 6, wherein said means for removing said receiving test tubes comprise elevator rods located beneath each of said test tubes.

9. The apparatus of claim 8, wherein said means for placing said test tubes into said predetermined positions comprise trap door means capable ot allowing said test tubes to rest and ride on said elevator rods, wherein said elevator rods guide said test tubes into said predetermined positions.

F I G. I

FIG. 2A

FIG. 2B

FIG. 2C

FIG. 3

FIG. 4B

FIG. 4A

F I G. 4C

F I G. 4D

FROM
PRESSURE
SOURCE

F I G. 5

CPU

TIMER

30

31

MAIN MEMORY

SINGLE BOARD COMPUTER FOR FDV INSERTER — 36

MAIN TERMINAL

32

SINGLE BOARD COMPUTER FOR PUMP STATION — 37

PRINTER

32

SINGLE BOARD COMPUTER FOR BAR CODE PRINT/APPLY STATION #1 — 38

HOST COMPUTER

33

SINGLE BOARD COMPUTER FOR BAR CODE PRINT/APPLY STATION #2 — 39

INTELLIGENT STEPPER MOTOR CONTROLLERS FOR SORT TABLE, ELEVATOR, COMPRESS AND EXIT

34

STATUS TERMINAL — 40

SINGLE BOARD COMPUTER FOR TUBE DETECTION, VOLUME MEAS. AND BAR CODE READER

35

OPTION TERMINAL — 41

F I G. 6

START

READ BAR CODE — S1

PRINT BAR CODE — S2

S4 — INSERT FDV INTO
PARENT SAMPLE

PUT BAR CODE-
PRINTED LABEL

S3

S5 — PUMP
PARENT SAMPLE

SORT
DIVIDED SAMPLES — S6

END

F I G. 7

## EUROPEAN SEARCH REPORT

European Patent Office

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| X<br><br>Y<br>A | EP-A-0 243 915  (T. ITOH)<br>* Figures 1-3; claims 1-2 * | 1,2<br><br>3-5<br>6,7 | G 01 N   35/06<br>G 01 N   35/04 |
| P,Y<br>D | EP-A-0 339 429  (F. HOFFMANN-LA ROCHE A.G.)<br>* Figures 1-2 * | 3-5 | |
| A | DE-A-2 217 669  (SIEMENS A.G.)<br>* Fig.; page 4, lines 6-15; claims 1-2 * | 3 | |
| A | US-A-3 782 548  (J.G. BOWEN)<br>* Figures 3-4; column 2, lines 38-48,59-62 * | 4,5 | |
| A | FR-A-2 136 707  (F. HOFFMANN-LA ROCHE & CIE)<br>* Figures 7-9; page 1, line 33 – page 2, line 5; page 2, line 26 – page 3, line 16 * | 8 | TECHNICAL FIELDS SEARCHED (Int. Cl.5)<br><br>G 01 N<br>B 01 L |

The present search report has been drawn up for all claims

| Place of search | Date of completion of the search | Examiner |
|---|---|---|
| THE HAGUE | 27-09-1990 | HOCQUET A.P.E. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)